# EUROPEAN PATENT APPLICATION

(11) **EP 2 876 471 A1**
(43) Date of publication of application: **27.05.2015**
(21) Application number: 13275286.6
(22) Date of filing: 22.11.2013
(51) Int. Cl.: G02B 6/36

(54) **Data transmission between relatively moving bodies**

(71) Applicant: BGB Engineering Limited, Grantham Lincolnshire NG31 7NB (GB)
(72) Inventor: Challans, John, Northampton, Northamptonshire NN7 4BG (GB); Chappell, Mark, Derby DE21 6LQ (GB)
(74) Representative: Loven, Keith James

(57) **Abstract**

Apparatus for transmitting data between first and second relatively moving bodies comprises an optical waveguide (140) mounted on a first of the bodies (110) and extending in the direction of relative motion of the bodies. The optical waveguide is adapted to radiate light travelling along the waveguide laterally thereof, and an optical detector (150) is mounted on the second of the bodies and positioned adjacent to the optical waveguide so as to receive light radiated therefrom. The waveguide is connected to a light source modulated with a data stream to be transmitted, and a demodulator receives the output of the optical detector and outputs a signal corresponding to the transmitted data.

## Description

### Field of the Invention

This invention relates to apparatus for transmitting data between a moving body and a stationary body.

### Background to the Invention

There is an increasing need to transmit data at high speed between a moving and a stationary body such as, for example, in the case of wind turbines, where control data and measurements need to be passed between the rotating blades and the controller for the turbine, located in the stationary part of the turbine structure. While some use has been made of slip ring technology, relying on direct conduction of electricity between stationary and moving conductors in contact with each other, this type of arrangement typically only supports low data rates because the electrical resistance varies as the contacting parts of the slip ring move relative to one another, introducing noise. In addition, slip rings can give rise to cross-contamination from RF signals. As the control and monitoring of turbines becomes more sophisticated, the data rates required are higher than can be supported.

Various proposals have been put forward for contactless data transmission systems based on optical fibres. These all transmit light from the end of a fibre across a rotary gap or joint to a detector, and relate to various ways of minimising data losses. Collectively this type of system is referred to as a fibre optic rotary joint or FORJ.

For example, WO2007/010362 discloses a FORJ using a geared rotating prism arrangement which attempts to maintain transmission of light along the axis of rotation. US4725116 discloses an arrangement in which the rotor and the stator each have a plurality of fibres, with mirrors being used to redirect off-axis optical signals. The arrangement disclosed in US6301405 has bundles of fibres oriented in hollow shafts at opposite ends of a passageway. US5442721 and US5271076 both discloses a FORJ with a rotary prism collimator between bundles of fibres.

All of these documents highlight the difficulty of aligning optical fibres end-on-end for the transmission of data between them across a rotary joint. An alternative approach is to use leaky light guides and to detect light escaping from the walls of the guide along a length thereof. Examples using this type of arrangement are in DE102009041416, which discloses a specially-shaped annular light guide with a tangential injection point, mounted on the rotor. Sensors on the stator pick up light escaping from the light guide walls. US 2009/324167 discloses a rotary transmitter having a number of LED "send elements", while the receiver has a curved waveguide connected at its end to a "receive element". A similar construction is required for each direction of data transmission.

### Summary of the Invention

According to the invention, there is provided apparatus as set out in the claims

### Brief Description of the Drawings

In the drawings, which illustrate diagrammatically exemplary embodiments of the invention:
Figure 1 is a top plan view of the cylindrical member forming the core of one embodiment of the apparatus;
Figure 2 is an end view of the cylindrical member of figure 1;
Figure 3 is an enlarged view of the portion marked A in Figure 1;
Figure 4 is a diagrammatic representation of an alternative apparatus;
Figure 5 is a side view of the cylindrical member forming the core of another embodiment of the apparatus;
Figure 6 is an end view of the cylindrical member of figure 5;
Figure 7 is a side view of the cylindrical member forming the core of yet another embodiment of the apparatus; and
Figure 8 is an end view of the cylindrical member of figure 7.

### Detailed Description of the Illustrated Embodiment

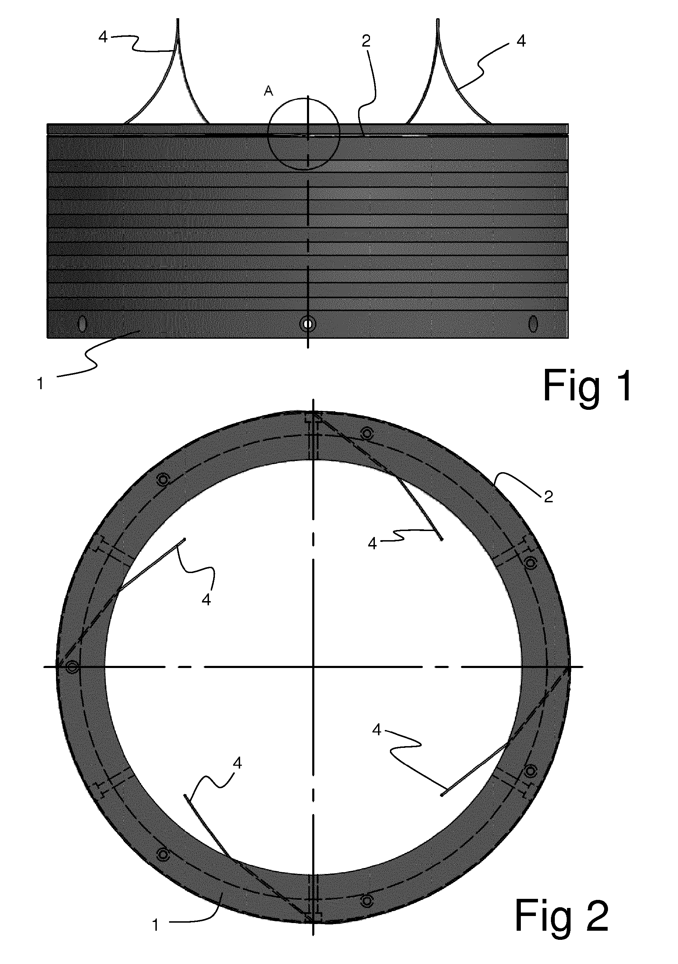

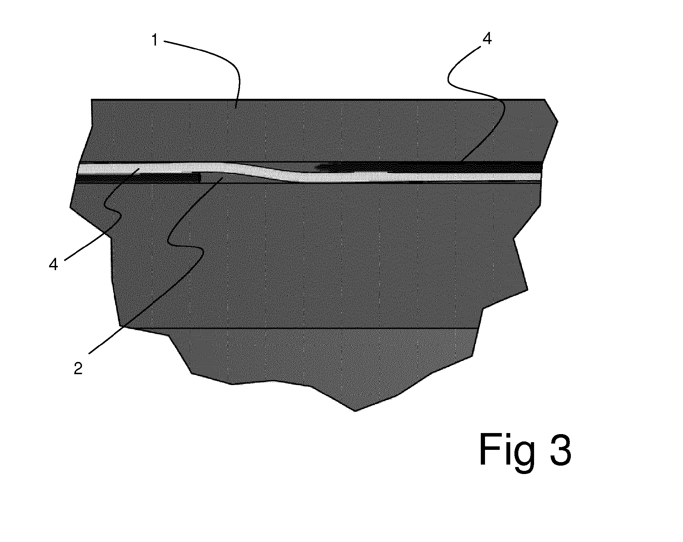

The apparatus shown in Figures 1 to 3 comprises a hollow cylindrical element 1 having a groove 2 around the circumference thereof, in which are lo-cated four optical fibres 4, each fibre entering the groove at a position separated by 90 degrees from the next fibre and extending along the groove over half the circumference of the cylindrical element. In this way, each fibre 4 enters the groove 2 alongside the preceding fibre in the groove 2 up to the point where the second fibre 4 enters the groove, at which point it changes from being on the upper side as illustrated in Figure 3 to the lower side, terminating just before the third fibre 4 enters the groove. This establishes continuity for the whole circumference of the cylinder 1, there being at all times at least one fibre in the groove, and for the greater part of the circumference two fibres, scattering a portion of the light passing through the fibres.

The fibres 4, illustrated in the Figures as simple tails, are connected to a laser light source within the rotor, modulated with the data signal.

A detector (not shown), for example a photo-cell, is positioned on the stationary part of the apparatus, spaced from the fibre surface by the smallest possible distance compatible with running clearance from the rotating body and receives a portion of the scattered light, permitting detection of the modulated light signal. This can then be demodulated and the output passed to the control and monitoring computer, for example where rotating machinery is being monitored and controlled.

Signals in the reverse direction are handled by using a detector mounted on the circumference of the cylinder, receiving light from fibres mounted inside a surrounding cylindrical housing in a corresponding manner to those mounted on the rotor.

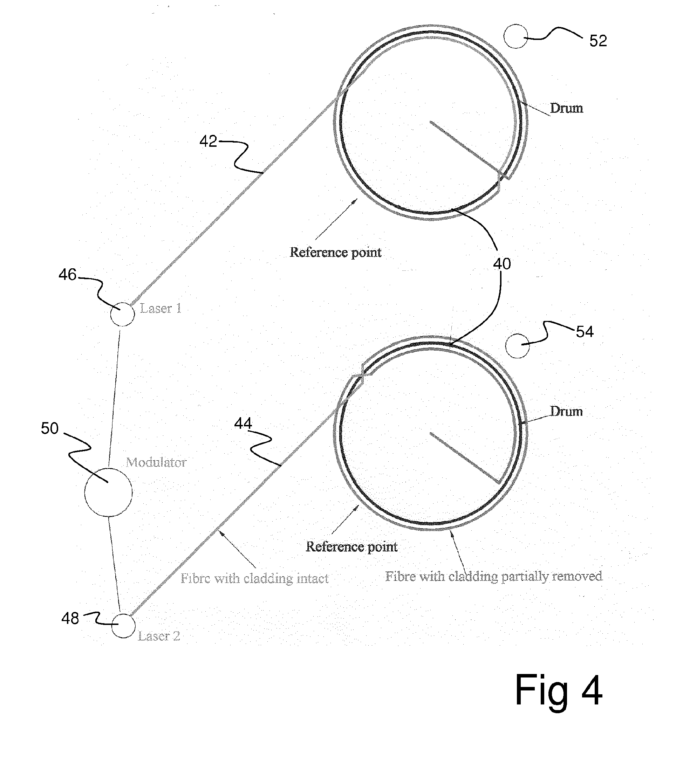

Referring now to Figure 4, a preferred arrangement is illustrated which avoids the need for a detector to receive light simultaneously from two fibres side-by-side in a groove. A drum or cylinder 40 has two parallel optical fibres 42 and 44 wrapped around it and spaced apart laterally, the point at which each fibre passes from the interior to the exterior of the cylinder 40 being separated from each other by 180°. Each fibre 42, 44 is coupled to a respective laser 46, 48, controlled by a modulator 50, in turn supplied with the data signal in conventional manner. The modulator 50 and the lasers 46, 48 are shown separately from the cylinder 40, for the sake of convenience. However, it will be understood that these components will be mounted within the rotating cylinder. Equally for convenience, each fibre mounted on the cylinder is illustrated as a separate "slice" of the cylinder displaced laterally. The fibres 42 and 44 are conveniently plastic fibres from which the cladding is removed from only that portion which extends around the exterior of the cylinder, so as to radiate light therefrom. A pair of static light detectors 52 and 54 is mounted side-by-side adjacent to the surface of the cylinder so that each can receive light from its respective fibre 42, 44.

It will be appreciated that when the interruption in one fibre corresponding to its transition from the interior to the exterior of the cylinder passes beneath the respective detector, thereby temporarily interrupting the data stream carried by the light, the other detector is receiving light from its adjacent fibre without interruption, and vice versa. By combining the outputs of the detectors after demodulation, the data stream can be received without interruption, thus permitting a high data rate to be achieved. Alternatively, the outputs of the detectors can be switched over from one to the other and back again to maintain continuity.

It will be necessary to ensure that the signal paths through the fibres are carefully controlled to ensure that the received signals from the two detectors exactly coincide to enable combination or switching; any difference in path length will lead to the signals being out of phase.

The return path (not illustrated) will comprise a detector or detectors mounted on the external surface of the cylinder, aligned with fibres arranged on the stator around the cylinder.

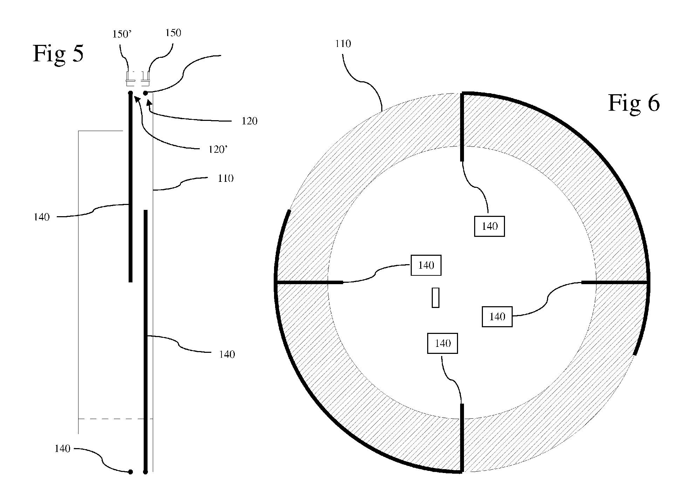

The apparatus shown in figures 5 and 6 comprises a hollow cylindrical element 110 having two side-by-side grooves 120, 120' around the circumference thereof. Four optical fibres 140 are located alternately in one of the two grooves 120, 120' so that each optical fibre 140 is displaced circumferentially from the next adjacent one. Each optical fibre 140 enters its respective groove 120, 120' at a position spaced 90° apart from where the next optical fibre 140 enters its respective groove 120, 120'. In figure 6, only the optical fibre located in the nearest groove 120 is visible. Each optical fibre 140 extends along its respective groove 120, 120' to a point beyond where the next optical fibre 140 enters its respective groove 120, 120', that is, each optical fibre 140 subtends an arc greater than 90°. In this way, each optical fibre 140 overlaps the next adjacent optical fibre 140 so as to extend side-by-side over part of their length. Again, as with the apparatus of figures 1 to 3, this enables continuity for the whole circumference.

A detector, represented in figure 5 by two photocells 150, 150', one for each groove 120, 120', is positioned on the stationary part of the apparatus (not shown).

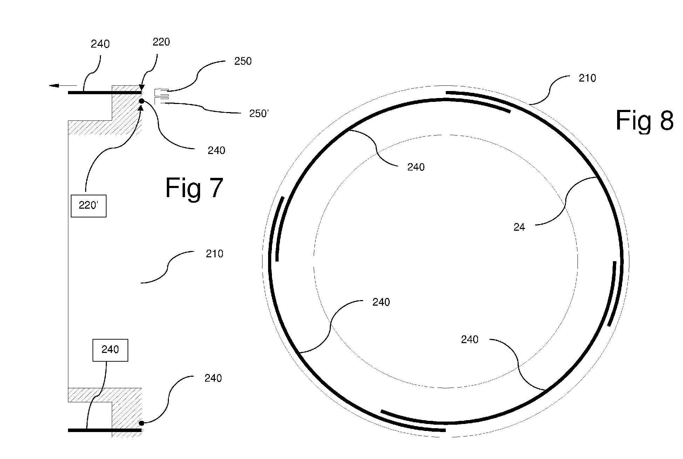

The apparatus shown in figures 7 and 8 comprises a hollow cylinder element 210 having two concentric, side-by-side circular grooves 220, 220' in the end face thereof. Four optical fibres 240 are alternately located in one of the two grooves 220, 220' so that each optical fibre 240 is displaced radially from the next adjacent one. Each optical fibre 240 enters its respective groove 220, 220' at a position spaced 90° apart from where the next optical fibre 240 enters its respective groove 220, 220'. Each optical fibre 240 extends along its respective groove 220, 220' to a point beyond where the next optical fibre 240 enters its respective groove 220, 220', that is, each optical fibre 240 subtends an arc greater than 90°. In this way, each optical fibre 240 overlaps the next optical fibre 240.

A detector, represented in figure 8 by two photocells 250, 250', one for each groove 220, 220', is positioned on the stationary part of the apparatus (not shown).

## Claims

1. Apparatus for transmitting data between first and second relatively moving bodies, comprising an optical waveguide mounted on a first of the bodies and extending in the direction of relative motion of the bodies, the optical waveguide being adapted to radiate light travelling along the waveguide laterally thereof, and an optical detector mounted on the second of the bodies and positioned adjacent to the optical waveguide so as to receive light radiated therefrom, the waveguide being connected to a light source modulated with a data stream to be transmitted, and a demodulator for receiving the output of the optical detector and outputting a signal corresponding to the transmitted data.

2. Apparatus according to Claim 1, wherein the first body is movable and the second body is stationary.

3. Apparatus according to Claim 1, wherein the first body is stationary and the second body is movable.

4. Apparatus according to Claim 2 or 3, wherein the movable body is a rotary body.

5. Apparatus according to Claim 4, wherein the rotary body has a cylindrical element having a cylindrical surface and an end surface with the waveguides mounted on the cylindrical surface or the end surface.

6. Apparatus according to Claim 5, wherein the waveguides are mounted on the cylindrical surface and are displaced circumferentially one from the other.

7. Apparatus according to Claim 5, wherein the waveguides are mounted on the end surface and are displace radially one from the other.

8. Apparatus according to Claim 4, wherein the rotary body has at least two optical waveguides, each extending around the body at a substantially constant radius from the axis of rotation of the body to subtend an arc greater than 180°, each waveguide being connected to a light source modulated with a data stream to be transmitted, the fixed body has a light detector positioned adjacent to each of the waveguides, each detector receiving light radiated from the respective waveguide and passing output to a respective demodulator, and means for selecting the data output by one of the demodulators or combining the output into a single data stream, the waveguides and detectors being positioned such that, at any rotary angle of the rotary body, at least one light detector is receiving light from its respective waveguide.

9. Apparatus according to Claim 4, wherein the rotary body has at least two optical waveguides, each extending around the body at a substantially constant radius from the axis of rotation of the body to subtend an arc greater than 180°, each waveguide being connected to a light source modulated with a data stream to be transmitted, the waveguides being positioned to extend side-by-side over a part of their lengths so that a single light detector will receive light from one or both waveguides at any rotational position of the rotary body.

10. Apparatus according to Claim 4, wherein the rotary body has a cylindrical element having a cylindrical surface and an end face and four waveguides located around the circumference of the cylindrical element, each extending at a substantially constant radius from the axis of rotation of the body to subtend an arc greater than 90°, each being located side-by-side with the next adjacent waveguide over a part of the length thereof.

11. Apparatus according to Claim 4, wherein the rotary body has a cylindrical element having a cylindrical surface and an end face and four waveguides located around the end face of the cylindrical element, each extending at a substantially constant radius from the axis of rotation of the body to subtend an arc greater than 90°, each being located side-by-side with the next adjacent waveguide over a part of the length thereof.

12. Apparatus according to any preceding claim, wherein the or each optical waveguide is an optical fibre having a core and a cladding layer therearound, and wherein the cladding layer is removed or reduced along that portion of the length of the fibre that extends along the relatively movable bodies to al-low light to radiate therefrom.

13. Apparatus according to Claim 12, wherein the or each optical fibre is a plastic optical fibre.

14. Apparatus according to Claim 4, wherein the stationary body has at least two optical waveguides, each extending around the body at a substantially constant radius from the axis of rotation of the rotary body to subtend an arc greater than 180°, each waveguide being connected to a light source modulated with a data stream to be transmitted, the rotary body carries a light detector positioned adjacent to each of the waveguides, each detector receiving light radiated from the respective waveguide and passing output to a respective demodulator, and means for selecting the data output by one of the demodulators or combining the output into a single data stream, the waveguides and detectors being positioned such that, at any rotary angle of the rotary body, at least one light detector is receiving light from its respective waveguide.

15. Apparatus according to Claim 14, wherein the stationary body has at least two optical waveguides, each extending around the body at a substantially constant radius from the axis of rotation of the rotary body to subtend an arc greater than 180°, each waveguide being connected to a light source modulated with a data stream to be transmitted, the waveguides being positioned to extend side-by-side over a part of their lengths so that a single light detector mounted on the rotary body can receive light from one or both waveguides at any rotational position of the rotary body.
